# EUROPÄISCHE PATENTSCHRIFT

(11) **EP 1 524 091 B1**
(45) Veröffentlichungstag und Bekanntmachung des Hinweises auf die Patenterteilung: **16.04.2008**
(21) Anmeldenummer: 04021905.7
(22) Anmeldetag: 15.09.2004
(51) Int. Cl.: B29C 45/27

(54) **Vorrichtung zum Anspritzen von insbesondere Kunststoffformteilen**
Apparatus for overmoulding in particular plastic parts
Dispositif pour surmouler en particulier des pièces en matière plastique

(30) Priorität: 29.09.2003 DE 10345578
(43) Veröffentlichungstag der Anmeldung: 20.04.2005
(73) Patentinhaber: Schreck, Hans, D-35099 Burgwald-Bottendorf (DE)
(72) Erfinder: Schreck, Hans, D-35099 Burgwald-Bottendorf (DE)
(74) Vertreter: Böck, Bernhard

(56) Entgegenhaltungen:
- EP-A- 0 186 413
- EP-A- 0 447 573
- DE-A1- 4 400 598
- US-A- 5 494 433
- US-A- 5 885 628

## Beschreibung

Die Erfindung betrifft eine Vorrichtung zum Anspritzen von insbesondere Kunststoffformteilen, wobei mindestens eine zu befüllende in einem Werkzeug ausgebildete Formkavität seitlich neben einem zentralen Düsenkörper angeordnet ist, mit mindestens einer im und/oder am Düsenkörper angeordneten Düsenspitze, die über die Umfangsfläche des Düsenkörpers nach außen hervorragt und in einer Ausnehmung des Werkzeugs und/oder des Düsenkörpers einen Einspritzkanal für die Formkavität bildet, nach dem Oberbegriff des Patentanspruchs 1.

Bei den bekannten Vorrichtungen dieser Art werden die Düsenspitzen vor dem Zusammenbau des Werkzeugs im Düsenkörper befestigt, in der Regel eingeschraubt. Um einen Zusammenbau des Werkzeugs dann überhaupt zu ermöglichen, muss das Werkzeug, das heißt das Element, in dem die zu befüllenden Formkavitäten angeordnet sind, entsprechend der Anzahl der Düsen und Formkavitäten segmentiert und zerlegbar sein. Dies erfordert zum einen vergleichsweise hohen konstruktiven Aufwand und zum anderen ist die Montage des Werkzeugs kompliziert und zeitaufwändig und dadurch mit hohen Kosten belastet.

Aus der EP 0 447 573 A1 ist eine Vorrichtung zum Anspritzen von Kunststoffformteilen bekannt, bei der Düsenspitzen radial an einen Düsenkörper angeordnet sind und in einer Ausnehmung eines Werkzeugs einen Einspritzkanal für eine Formkavität bilden. Der einzuspritzende Kunststoff tritt an einem unteren Ende eines Kanals im Düsenkörper aus und wird durch einen, zwischen dem Düsenkörper, einer Form und einer Bodenabdeckung ausgebildeten Raum zum Einspritzkanal geleitet.

Die EP 0 186 413 A2 offenbart eine Vorrichtung zum Anspritzen von Kunststoffformteilen, bei der verflüssigter Kunststoff durch einen Kanal in einem Düsenkörper zu einer Düse geleitet wird. Im Düsenkörper selbst ist ein Heizelement und am unteren Ende des Düsenkörpers zumindest eine Halterung für eine Düsenspitze angeordnet. Das untere Ende des Düsenkörpers ist vollständig in einen Formkörper eingesetzt und von flüssigem Material umgeben.

Ausgehend von diesem Stand der Technik ist es die Aufgabe der vorliegenden Erfindung, eine gattungsgemäße Vorrichtung zu schaffen, die einen einfachen Aufbau aufweist und in einfacher und kostengünstiger Weise montierbar und demontierbar ist.

Diese Aufgabe wird durch eine Vorrichtung nach der Lehre des Patentanspruchs 1 gelöst.

Vorteilhafte Ausgestaltungen der Erfindung sind Gegenstand der Unteransprüche.

Die erfindungsgemäße Vorrichtung zum Anspritzen von insbesondere Kunststoffformteilen weist in zunächst an sich bekannter Weise mindestens eine zu befüllende in einem Werkzeug ausgebildete Formkavität, die seitlich neben einem zentralen Düsenkörper angeordnet ist, und mindestens eine im und/oder am Düsenkörper angeordneten Düsenspitze auf, die über die Umfangsfläche des Düsenkörpers nach außen hervorragt und in einer Ausnehmung des Werkzeugs und/oder des Düsenkörpers einen Einspritzkanal für die Formkavität bildet.

Erfindungsgemäß ist im Bereich des Bodens des Düsenkörpers mindestens eine weitere Ausnehmung angeordnet, wobei diese Ausnehmung mit mindestens einer durchgehende Öffnung versehen ist, die die Ausnehmung mit der Umfangsfläche des Düsenkörpers verbindet und wobei die Düsenspitze durch die Ausnehmung in die Öffnung einbringbar und dort lösbar befestigbar ist. Durch diese Gestaltung lässt sich der Düsenkörper bei der Montage des Werkzeugs zunächst ohne insbesondere herausragende Düsenspitzen in die entsprechende Ausnehmung des Werkzeuges mehr oder weniger formschlüssig einsetzen, wonach dann erst die Düsenspitzen unter Eingriff in die jeweiligen Formkavitäten bzw. die entsprechenden Zuführungskanäle montiert werden. Eine Segmentierung des Werkzeugs ist daher nicht mehr notwendig.

In grundsätzlich beliebiger Weise ist eine Anordnung mit nur einer Formkavität denkbar. Vorzugsweise jedoch ist eine Mehrzahl von Düsenspitzen vorgesehen und die Ausnehmung ist mit einer der Anzahl der Düsenspitzen entsprechenden Anzahl von Öffnungen versehen.

Die Anordnung der Formkavitäten im Werkzeug und damit entsprechend auch die Anordnung der Düsenspitzen im Düsenkörper ist beliebig. Nach einem Ausführungsbeispiel jedoch sind die Düsenspitzen im Düsenkörper zumindest gruppenweise in Reihe und/oder nach Art eines Dreicks, Quadrates oder einer polygonen Gestalt angeordnet. Dabei kann die Anordnung auch nicht ur in einer Ebene sondern auch räumlich versetzt erfolgen.

Gemäß einem weiteren Ausführungsbeispiel weist der Düsenkörper zumindest abschnittsweise eine im wesentlichen zylindrische Gestalt auf, wobei die Öffnungen derart angeordnet sind, dass die Düsenspitzen im wesentlichen sternartig in radialer Richtung aus dem Düsenkörper hervorragen. Bei einer derartigen Gestaltung ergibt sich ein einfacher im wesentlichen rotationssymmetrischer Aufbau der Vorrichtung.

Die Gestalt der Ausnehmung im Boden des Düsenkörpers ist zunächst grundsätzlich beliebig. Nach einem bevorzugten Ausführungsbeispiel jedoch weist die Ausnehmung eine im Querschnitt im wesentlichen napfartige zylindrische oder polygone Gestalt mit einem senkrecht zur Längsachse des Düsenkörpers verlaufenden Boden und einer dazu im wesentlichen senkrecht verlaufenden Seitenwand auf. Vorzugsweise sind dabei die Öffnungen im wesentlichen im Bereich der Seitenwand angeordnet.

Die Befestigung der Düsenspitzen im Düsenkörper kann auf eine beliebige Weise erfolgen. Nach einem Ausführungsbeispiel weisen dazu die Düsenspitzen an ihrem der Spitze gegenüberliegenden Ende einen flansch-, bund- oder kopfartigen Absatz auf, wobei vorzugsweise die zur Seitenwand der Ausnehmung weisende Bundfläche des kopfartigen Absatzes der Düsenspitzen als Anschlagfläche ausgebildet ist, die an der Seitenwand der Ausnehmung sich abstützend zur Anlage bringbar ist. Dadurch ergibt sich eine genau axial festgelegte Position der Düsenspitzen im Düsenkörper.

Die Düsenspitzen und die durchgehenden Öffnungen sind vorzugsweise zumindest abschnittsweise mit im wesentlichen zylindrischen Passflächen versehen, dergestalt dass die Düsenspitzen zumindest im wesentlichen spielfrei in die Öffnungen einsteckbar sind. Dadurch ergibt sich eine genau radial festgelegte Position der Düsenspitzen im Düsenkörper. Die Begriffe "axial" und "radial" beziehen sich dabei auf die Längsachse der Düsenspitzen.

Um die Düsenspitzen bei der Demontage des Werkzeugs oder zu Reparaturzwecken oder dergleichen aus dem Düsenkörper zu entfernen, weist nach einem Ausführungsbeispiel der kopfartige Absatz einen Eingriff für ein Werkzeug aufweist, mit dem die Düsenspitzen aus der Öffnung ziehbar sind. Dabei kann der Eingriff beispielsweise durch eine zumindest abschnittsweise den kopfartigen Absatz an seiner radialen Außenfläche umlaufende ringnutartig Vertiefung gebildet oder durch ein in der Kopffläche ausgebildetes Innengewinde gebildet werden.

Nach einem weiteren Ausführungsbeispiel ist in der Ausnehmung zwischen den kopfartigen Absätzen der Düsenspitzen ein Befestigungselement lösbar angeordnet, dessen zu den Kopfflächen der Düsenspitzen weisende Außenflächen als Anschlagflächen an die Kopfflächen derart ausgebildet ist, dass bei montierten Düsenspitzen und montiertem Befestigungselement die Kopfflächen der Düsenspitzen an den Anschlagflächen sich abstützend zur Anlage gelangen. Dies bedeutet mit anderen Worten, dass dieses Befestigungselement als Sicherung gegen ein unbeabsichtigtes Lösen der Düsenspitzen durch Herausgleiten aus der jeweiligen Öffnung des Düsenkörpers in die Ausnehmung dient.

Die Gestalt dieses Befestigungselementes ist grundsätzlich beliebig- So kann dieses beispielsweise ringförmig, sternförmig oder stabförmig ausgebildet sein. Vorzugsweise jedoch ist das Befestigungselement als im Querschnitt im wesentlichen zylindrischer oder polygoner Befestigungsblock ausgebildet, der mittels einer Befestigungsschraube am Boden der Ausnehmung lösbar befestigbar ist.

Nach einer weiteren Ausgestaltung der Befestigung der Düsenspitzen im Düsenkörper sind die Düsenspitzen zumindest abschnittsweise mit einem Außengewinde und die durchgehenden Öffnungen im Düsenkörper zumindest abschnittsweise mit einem dazu komplementären Innengewinde versehen, so dass die Düsenspitzen in die Öffnungen einschraubbar sind. Dabei kann der kopfartige Absatz nach Art eines Schraubenkopfes, insbesondere nach Art einer Inbusschraube mit Innensechskant, ausgebildet sein.

Die Ausnehmung im Düsenkörper kann grundsätzlich offen verleiben. Um insbesondere jedoch Verschmutzungen der Düsenspitzen in diesem bereich zu verhindern kann nach einem weiteren Ausführungsbeispiel die Ausnehmung mittelbar oder unmittelbar mit einem Deckel verschließbar sein.

Nach einem bevorzugten Ausführungsbeispiel weisen die Öffnungen an ihrem zur Außenumfangsfläche des Düsenkörpers weisenden Ende einen Innendurchmesser auf, der größer als der Außendurchmesser der Düsenspitzen in diesem Bereich ist. Dadurch wird zwischen der Außenwand der Düsenspitzen und der Innenwand der Öffnungen ein im Querschnitt ringförmiger Bereich gebildet, in den das Kunststoffmaterial eingespritzt wird. Dabei kann der ringförmige Bereich durch ein Ringelement umschlossen sein, das in der Öffnung des Düsenkörpers angeordnet ist. Dieses Ringelement kann weiter auswechselbar sein.

Nach einem besonders bevorzugten Ausführungsbeispiel besteht das Ringelement aus einem schlecht wärmeleitenden Material, insbesondere aus Titan. Dadurch kann zuverlässig verhindert werden, dass beim Einspritzen von schmelzflüssigem Kunststoffmaterial dieses bereits im Bereich der Düsenspitzen erstarrt.

Das Ringelement kann bündig mit der Außenumfangsfläche des Düsenkörpers abschließen oder sogar gegenüber dieser zurückversetzt sein. Vorzugsweise jedoch ragt das Ringelement zumindest geringfügig über die Außenumfangsfläche des Düsenkörpers hervor und ist an der zugeordnet Fläche des die Formkavität aufweisenden Werkzeugs abdichtend zur Anlage bringbar. Dadurch kann zum einen ein unerwünschtes Austreten des Kunststoffmaterials in den Spalt zwischen dem Werkzeug und dem Düsenkörper verhindert werden und zum anderen können die Wärmeverluste durch Wärmeleitung zwischen dem Düsenkörper und dem Werkzeug minimiert werden.

Die Zuführung des Kunststoffmaterials zum Werkzeug bzw. zu den Formkavitäten kann nach einem Ausführungsbeispiel über einen zentralen Zuführungskanal im Düsenkörper erfolgen, der sich in Zuführleitungen zu den Düsenspitzen verzweigt. Dabei können die Zuführleitungen unmittelbar in den ringförmigen Bereich um die Düsenspitzen münden.

Nach einer alternativen Ausgestaltung weisen die Düsenspitzen jeweils eine im wesentlichen in Längsrichtung durchgehende Ausnehmung auf, die sich von der Kopffläche bis in den Bereich der Spitze erstreckt, wobei die Zuführleitungen im Bereich der Kopffläche in die Düsenspitzen münden, so dass das Kunststoffmaterial über die Düsenspitzen mittelbar in den ringförmigen Bereich eingespritzt wird.

Dabei kann das Befestigungselement der Anzahl der Düsenspitzen entsprechende im wesentlichen radial verlaufende Kanäle aufweisen, wobei diese Kanäle an ihrem ersten Ende am Zuführkanal des Düsenkörpers angeschlossen sind und mit ihrem zweiten Ende in die jeweiligen der Düsenspitzen münden.

Insbesondere wenn schmelzflüssige Kunststoffe verarbeitet werden sollen, kann nach einem weiteren Ausführungsbeispiel der Düsenkörper mit einer Einrichtung zur Temperierung, insbesondere mit einer Heizeinrichtung, versehen sein.

Im folgenden wird die Erfindung anhand lediglich Ausführungsbeispiele darstellender Zeichnungen näher erläutert. Es zeigt
- **Fig. 1**: in lediglich schematischer im Längsschnitt ein erstes Ausführungsbeispiel einer erfindungsgemäßen Vorrichtung in teilweise montiertem Zustand;
- **Fig. 2**: das Ausführungsbeispiel nach Fig. 2 höchst schematisch im Querschnitt entlang der Schnittlinie F - F in Fig. 1;
- **Fig. 3**: das Ausführungsbeispiel nach den Fig. 1 bis 2 in einer der Fig. 1 entsprechenden Darstellung in fertig montiertem Zustand der Düsenspitzen;
- **Fig. 4**: das Ausführungsbeispiel nach den Fig. 1 bis 3 in einer der Fig. 2 entsprechenden Darstellung;
- **Fig. 5**: ein zweites Ausführungsbeispiel einer erfindungsgemäßen Vorrichtung in seitlicher teilweise aufgebrochener schematischer Darstellung, wobei die Zufuhr des zu spritzenden Kunststoffmaterials durch die Düsenspritzen erfolgt;
- **Fig. 6**: das Ausführungsbeispiel nach Fig. 5 in teilweise aufgebrochener Darstellung von unten; und
- **Fig. 7**: ein weiteres Ausführungsbeispiel einer erfindungsgemäßen Vorrichtung in teilweise aufgebrochener Darstellung in Ansicht von unten, wobei die Düsen in zwei Reihen angeordnet sind.

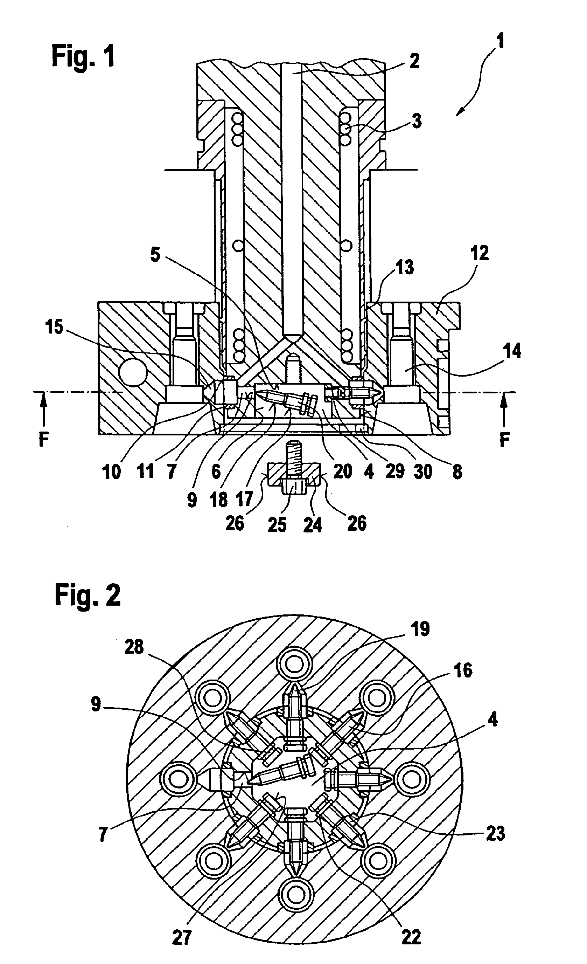

Die in der Fig. 1 dargestellte Vorrichtung weist zunächst einen Düsenkörper 1 auf, der insgesamt abschnittsweise im wesentlich kreiszylindrisch ausgebildet ist. Der Düsenkörper 1 ist mit einem zentralen Zuführkanal 2 versehen, über den das zu spritzende Kunststoffmaterial zu den eigentlichen Düsen gefördert wird. Um eine sichere Förderung ohne Erstarrung des flüssigen Kunststoffmaterials zu gewährleisten, ist der Düsenkörper 1 mit einer lediglich schematisch angedeutete Heizeinrichtung 3 versehen, die nach Art einer Wicklung den Düsenkörper 1 abschnittsweise umgreift.

Im Bereich des Bodens des Düsenkörpers 1 ist eine Ausnehmung 4 im Düsenkörper angeordnet, die eine im wesentlichen napfartige Gestalt mit flachem Boden 5 und einer dazu senkrecht verlaufenden polygonen Seitenwand 6 aufweist. Die Seitenwand 6 ist mit acht durchgehenden sternartig angeordneten Öffnungen 7 versehen, die die Ausnehmung 4 mit der Umfangsfläche 8 des Düsenkörpers 1 verbinden. Die Öffnungen 7 weisen jeweils die gleiche Gestalt mit einer im wesentlichen zylindrischen Passfläche 9 und einem ebenfalls im wesentlichen zylindrischen Bereich 10 mit größerem Durchmesser auf.

In diesen Bereich 10 größeren Durchmessers ist ein Ringelement 11 aus Titan eingesetzt, das geringfügig über die Außenumfangsfläche 8 des Düsenkörpers hervorragt.

Der Düsenkörper 1 wird bei der Montage in eine zentrale Ausnehmung 13 des eigentlichen Werkzeugs 12, das acht zu füllende Formkavitäten 14 aufweist, derart eingesetzt, dass die Öffnungen 7 jeweils einer Einspritzöffnung 15 jeder Formkavität 14 des Werkzeugs 12 gegenüber liegen, wobei jedes Ringelement 11 an der Wand des Werkzeugs 12 dichtend zur Anlage gelangt. Nach dieser Vormontage, die keinerlei Teilung des Werkzeugs erfordert, erfolgt die Montage der Düsenspitzen 16 wie nachfolgend beschrieben.

Die Düsenspitzen 20 weisen eine zumindest abschnittsweise zylindrische Gestalt mit zwei zylindrischen Abschnitten 17 und 18 sowie einer Spitze 19 auf. An ihrem der Spitze 19 gegenüberliegenden Ende ist die Düsenspitze 20 mit einem kopfartigen Absatz 21 versehen. Nachdem die Vormontage des Düsenkörpers wie vorstehend beschrieben erfolgt ist, werden die Düsenspitzen 20 durch die Öffnungen 7 derart in den Düsenkörper 1 eingesteckt, dass der als Passfläche ausgebildet Abschnitt 17 an der zylindrischen Passfläche 9 der Öffnung 7 zur Anlage gelangt. Gleichzeitig gelangt die Bundfläche 22 des kopfartigen Absatzes 21 an der Seitenwand 6 der Ausnehmung 4 sich abstützend zur Anlage. Der Abschnitt 18 geringeren Durchmessers der Düsenspitze 20 ragt durch den durch das Ringelement 11 gebildeten Abschnitt größeren Durchmessers der Öffnung 7 und bildet dort einen ringförmigen Bereich 23. Die Spitze 19 der Düsenspitzen 1 ragt nach radial außen über den Düsenkörper 1 hervor und greift in die kegelförmige Einspritzöffnung 15 des Werkzeugs 12 ein. Der zwischen dem Ringelement 11 und der Innenwand der Einspritzöffnung 15 einerseits und der Außenfläche der Düsenspitze 20 andererseits gebildet Ringraum dient dabei zum Einspritzen des Kunststoffmaterials in die jeweilige Formkavität.

Wenn sämtliche Düsenspitzen 20 in ihre jeweiligen Öffnungen 7 eingesteckt sind, wird ein blockartiges Befestigungselement 24 von unten in die Ausnehmung 4 eingesetzt und dort mittels einer Befestigungsschraube 25 am Boden 5 der Ausnehmung 4 verschraubt. Das Befestigungselement weist wie die Ausnehmung 4 ebenfalls eine polygone, gegebenenfalls jedoch auch eine zylindrische, Gestalt mit Anschlagflächen 26 auf. Bei eingeschraubtem Befestigungselement 24 gelangen die Anschlagflächen 26 an den Kopfflächen 27 der Düsenspitzen 1 zur Anlage und halten diese damit zuverlässig in ihrer Montageposition.

Zur Demontage oder zum Austausch der Düsenspitzen 20 wird zunächst das Befestigungselement 24 durch Lösen der Befestigungsschraube 25 aus der Ausnehmung 24 entfernt. Anschließend werden die Düsenspitzen 1 aus den Öffnungen 7 gegebenenfalls unter Zuhilfenahme eines nicht dargestellten Werkzeugs gezogen. Dazu weisen die Düsenspitzen 20 entweder eine ringnutartige Vertiefung 28 oder aber ein Innengewinde 29 im kopfartigen Absatz 21 auf, an der bzw. an dem das Werkzeug zum Ansatz oder Eingriff gebracht werden kann.

Um die Ausnehmung vor dem Eindringen von Schmutz oder dergleichen zu schützen ist die Ausnehmung 4 mit einem Deckel 30 zu verschließen.

Der zentrale Zuführkanal 2 im Düsenkörper 1 verzweigt sich sternförmig in Zuführleitungen 31 zu den einzelnen Düsenspitzen 1, die jeweils unmittelbar in den Ringraum zwischen Düsenspitze 20 und die gegenüberliegenden Wandbereiche des Düsenkörpers 1 bzw. Ringelementes 11 und der Einspritzöffnung 15 münden.

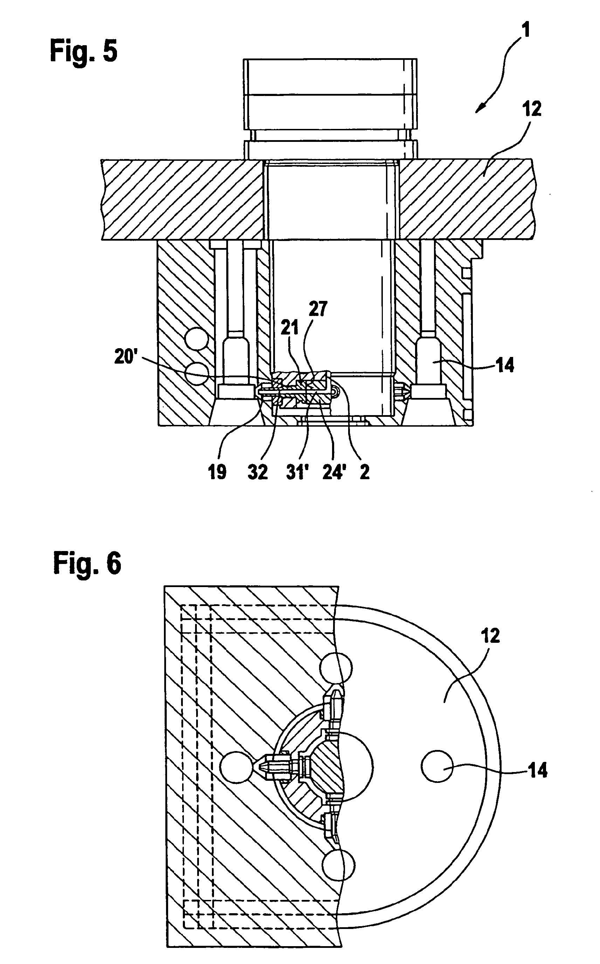

Das Ausführungsbeispiel nach den Fig. 5 und 6 weist grundsätzlich den gleichen Aufbau auf. Im Gegensatz zum vorstehend beschriebenen Ausführungsbeispiel jedoch mündet der zentrale Zuführkanal 2 in das Befestigungselement 24' und wird dort sternförmig über Zuführleitungen 31' zu den Düsenspitzen 20' geführt. Die Düsenspitzen 20' weisen jeweils eine in Längsrichtung durchgehende Ausnehmung 32 auf, die sich von der Kopffläche 27 des kopfartigen Absatzes 21 bis in den Bereich der Spitze 19 erstreckt und dort in den Ringraum mündet.

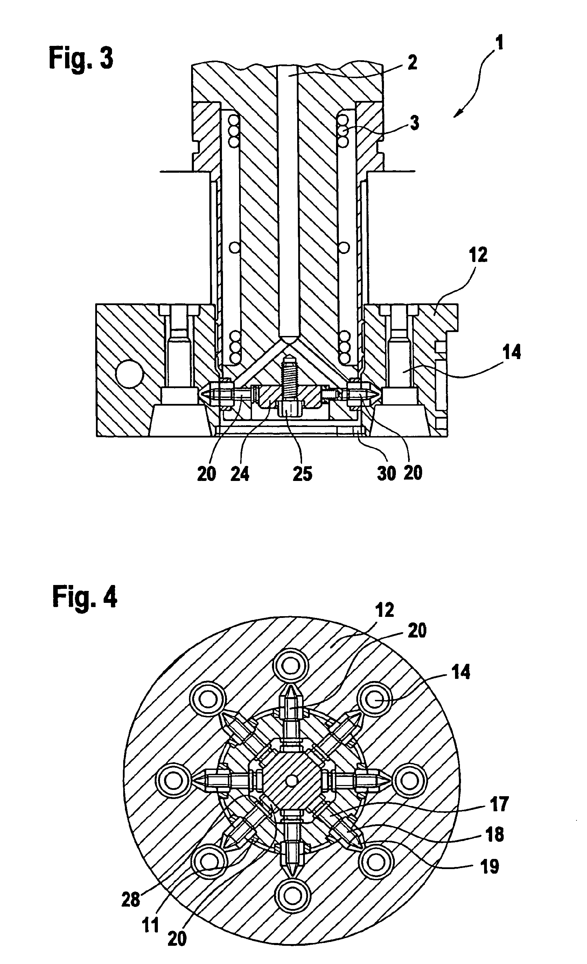

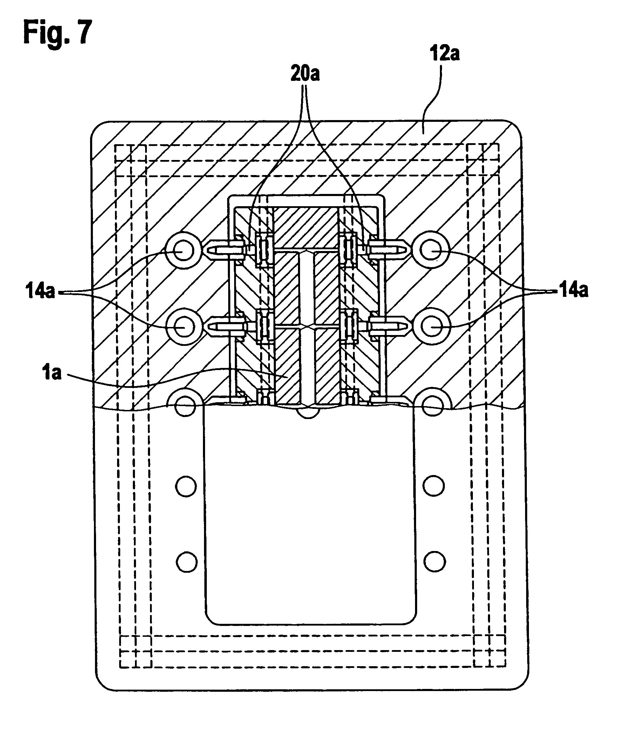

Im Gegensatz zu den Ausführungsbeispielen nach den Fig. 1 bis 5, bei denen die Formkavitäten kreisförmig und die Düsenspitzen entsprechend sternförmig angeordnet sind, weist das in der Fig. 7 schematisch dargestellte Ausführungsbeispiel ein Werkzeug 12a auf, bei dem die zu befüllenden Formkavitäten 14a in zwei parallelen Reihen angeordnet. In entsprechender Anordnung sind die Düsenspitzen 20a ebenfalls in zwei parallelen Reihen in einem länglichen im Querschnitt im wesentlichen rechteckigen Düsenkörper 1 a vorgesehen. Die Befestigung der Düsenspitzen im Düsenkörper entspricht dabei der vorstehend beschriebenen Befestigung.

## Patentansprüche

1. Vorrichtung zum Anspritzen von insbesondere Kunststoffformteilen, wobei mindestens eine zu befüllende in einem Werkzeug (12) ausgebildete Formkavität (14) seitlich neben einem zentralen Düsenkörper (1) angeordnet ist, mit mindestens einer im und/oder am Düsenkörper (1) angeordneten Düsenspitze (20), die über die Umfangsfläche (8) des Düsenkörpers (1) nach außen hervorragt und in einer Ausnehmung (10) des Werkzeugs (12) und/oder des Düsenkörpers (1) einen Einspritzkanal für die Formkavität (14) bildet,
**dadurch gekennzeichnet,**
**dass** im Bereich des Bodens des Düsenkörpers (1) mindestens eine weitere Ausnehmung (4) angeordnet ist, wobei diese Ausnehmung (4) mit mindestens einer durchgehende Öffnung (7) versehen ist, die die Ausnehmung (4) mit der Umfangsfläche (8) des Düsenkörpers (1) verbindet und wobei die Düsenspitze (20) durch die Ausnehmung (4) in die Öffnung (7) einbringbar und dort lösbar befestigbar ist.

2. Vorrichtung nach Anspruch 1,
**dadurch gekennzeichnet,**
**dass** eine Mehrzahl von Düsenspitzen (20) vorgesehen und die Ausnehmung (4) mit einer der Anzahl der Düsenspitzen (20) entsprechenden Anzahl von Öffnungen (7) versehen ist.

3. Vorrichtung nach Anspruch 1 oder 2,
**dadurch gekennzeichnet,**
**dass** die Düsenspitzen (20a) im Düsenkörper (1a) zumindest gruppenweise in Reihe und/oder nach Art eines Dreicks, Quadrates oder in polygoner Gestalt angeordnet sind.

4. Vorrichtung nach Anspruch 1 oder 2,
**dadurch gekennzeichnet,**
**dass** der Düsenkörper (1) zumindest abschnittsweise eine im wesentlichen zylindrische Gestalt aufweist, wobei die Öffnungen (7) derart angeordnet sind, dass die Düsenspitzen (20) im wesentlichen sternartig in radialer Richtung aus dem Düsenkörper (1) hervorragen.

5. Vorrichtung nach einem der Ansprüche 1 bis 4,
**dadurch gekennzeichnet,**
**dass** die Ausnehmung (4) eine im Querschnitt im wesentlichen napfartige zylindrische oder polygone Gestalt mit einem senkrecht zur Längsachse des Düsenkörpers (1) verlaufenden Boden (5) und einer dazu im wesentlichen senkrecht verlaufenden Seitenwand (6) aufweist.

6. Vorrichtung nach Anspruch 5,
**dadurch gekennzeichnet,**
**dass** die Öffnungen (7) im wesentlichen im Bereich der Seitenwand (6) angeordnet sind.

7. Vorrichtung nach Anspruch einem der Ansprüche 1 bis 6,
**dadurch gekennzeichnet,**
**dass** die Düsenspitzen (20) an ihrem der Spitze (19) gegenüberliegenden Ende einen flansch-, bund- oder kopfartigen Absatz (21) aufweisen.

8. Vorrichtung nach Anspruch 7,
**dadurch gekennzeichnet,**
**dass** die zur Seitenwand (6) der Ausnehmung (4) weisende Bundfläche (26) des kopfartigen Absatzes (21) der Düsenspitzen (20) als Anschlagfläche ausgebildet ist, die an der Seitenwand (6) der Ausnehmung (4) sich abstützend zur Anlage bringbar ist.

9. Vorrichtung nach einem der Ansprüche 1 bis 8,
**dadurch gekennzeichnet,**
**dass** die Düsenspitzen (20) und die durchgehenden Öffnungen (7) zumindest abschnittsweise mit im wesentlichen zylindrischen Passflächen (17, 9) versehen sind, dergestalt dass die Düsenspitzen (20) zumindest im wesentlichen spielfrei in die Öffnungen (7) einsteckbar sind.

10. Vorrichtung nach einem der Ansprüche 7 bis 9,
**dadurch gekennzeichnet,**
**dass** der kopfartige Absatz (21) einen Eingriff (28, 29) für ein Werkzeug aufweist, mit dem die Düsenspitzen (20) aus der Öffnung ziehbar sind.

11. Vorrichtung nach Anspruch 10,
**dadurch gekennzeichnet,**
**dass** der Eingriff durch eine zumindest abschnittsweise den kopfartigen Absatz (21) an seiner radialen Außenfläche umlaufende ringnutartig Vertiefung (28) gebildet wird.

12. Vorrichtung nach Anspruch 10,
**dadurch gekennzeichnet,**
**dass** der Eingriff durch ein in der Kopffläche ausgebildetes Innengewinde (29) gebildet wird.

13. Vorrichtung nach einem der Ansprüche 7 bis 12,
**gekennzeichnet**
**durch** ein in der Ausnehmung (4) zwischen den kopfartigen Absätzen (21) der Düsenspitzen (20) anordenbares Befestigungselement (24, 24'), dessen zu den Kopfflächen der Düsenspitzen (20) weisende Außenflächen (26) als Anschlagflächen an die Kopfflächen derart ausgebildet ist, dass bei montierten Düsenspitzen (20) und montiertem Befestigungselement (24, 24') die Kopfflächen der Düsenspitzen (20) an den Anschlagflächen (26) sich abstützend zur Anlage gelangen.

14. Vorrichtung nach Anspruch 13,
**dadurch gekennzeichnet,**
**dass** das Befestigungselement (24, 24') als im Querschnitt im wesentlichen zylindrischer oder polygoner Befestigungsblock ausgebildet ist, der mittels einer Befestigungsschraube (25) am Boden (5) der Ausnehmung (4) lösbar befestigbar ist.

15. Vorrichtung nach einem der Ansprüche 1 bis 8,
**dadurch gekennzeichnet,**
**dass** die Düsenspitzen (20) zumindest abschnittsweise mit einem Außengewinde und die durchgehenden Öffnungen (7) zumindest abschnittsweise mit einem dazu komplementären Innengewinde versehen sind, so dass die Düsenspitzen (20) in die Öffnungen (7) einschraubbar sind.

16. Vorrichtung nach Anspruch 15,
**dadurch gekennzeichnet,**
**dass** der kopfartige Absatz (21) nach Art eines Schraubenkopfes, insbesondere nach Art einer Inbusschraube mit Innensechskant, ausgebildet ist.

17. Vorrichtung nach einem der Ansprüche 1 bis 16,
**dadurch gekennzeichnet,**
**dass** die Ausnehmung (4) mittelbar oder unmittelbar mit einem Deckel (30) verschließbar ist.

18. Vorrichtung nach einem der Ansprüche 1 bis 17,
**dadurch gekennzeichnet,**
**dass** die Öffnungen (7) an ihrem zur Außenumfangsfläche (8) des Düsenkörpers (1) weisenden Ende einen Innendurchmesser aufweisen, der größer als der Außendurchmesser der Düsenspitzen (20) in diesem Bereich ist, so dass zwischen der Außenwand der Düsenspitzen (20) und der Innenwand der Öffnungen (7) ein im Querschnitt ringförmiger Bereich gebildet wird, in den das Kunststoffmaterial eingespritzt wird.

19. Vorrichtung nach Anspruch 18,
**dadurch gekennzeichnet,**
**dass** der ringförmige Bereich durch ein Ringelement (11) umschlossen ist, das in der Öffnung (7) des Düsenkörpers (20) angeordnet ist.

20. Vorrichtung nach Anspruch 19,
**dadurch gekennzeichnet,**
**dass** das Ringelement (11) aus einem schlecht wärmeleitenden Material, insbesondere aus Titan, besteht.

21. Vorrichtung nach Anspruch 19 oder 20,
**dadurch gekennzeichnet,**
**dass** das Ringelement (11) zumindest geringfügig über die Außenumfangsfläche (8) des Düsenkörpers (1) hervorragt und an der zugeordnet Fläche des die Formkavität (14) aufweisenden Werkzeugs (12) abdichtend zur Anlage bringbar ist.

22. Vorrichtung nach einem der Ansprüche 1 bis 21,
**dadurch gekennzeichnet,**
**dass** der Düsenkörper (1) einen zentralen Zuführkanal (2) für das zu spritzende Kunststoffmaterial aufweist, der sich in Zuführleitungen (31) zu den Düsenspitzen (20) verzweigt.

23. Vorrichtung nach Anspruch 22,
**dadurch gekennzeichnet,**
**dass** die Zuführleitungen (31) unmittelbar in den ringförmigen Bereich um die Düsenspitzen (20) münden.

24. Vorrichtung nach Anspruch 22,
**dadurch gekennzeichnet,**
**dass** die Düsenspitzen (20) jeweils eine im wesentlichen in Längsrichtung durchgehende Ausnehmung (32) aufweisen, die sich von der Kopffläche (27) bis in den Bereich der Spitze (19)erstreckt, wobei die Zuführleitungen (31') im Bereich der Kopffläche (27) in die Düsenspitzen (20) münden, so dass das Kunststoffmaterial über die Düsenspitzen (20) mittelbar in den ringförmigen Bereich eingespritzt wird.

25. Vorrichtung nach Anspruch 24,
**dadurch gekennzeichnet,**
**dass** das Befestigungselement (24') der Anzahl der Düsenspitzen (20) entsprechende im wesentlichen radial verlaufende Kanäle (31') aufweist, wobei diese Kanäle (31') an ihrem ersten Ende am Zuführkanal (2) des Düsenkörpers (1) angeschlossen sind und mit ihrem zweiten Ende in die jeweiligen Ausnehmungen (32)der Düsenspitzen (20) münden.

26. Vorrichtung nach einem der Ansprüche 1 bis 25,
dass der Düsenkörper (1) mit einer Einrichtung zur Temperierung, insbesondere mit einer Heizeinrichtung (3), versehen ist.

## Claims

1. Apparatus for injection-moulding especially plastic mouldings, at least one mould cavity (14) to be filled, constructed in a mould (12), being arranged laterally next to a central nozzle body (1), with at least one nozzle tip (20) which is arranged in and/or on the nozzle body (1), projects outwards over the circumferential surface (8) of the nozzle body (1) and forms an injection channel for the mould cavity (14) in a recess (10) of the mould (12) and/or the nozzle body (1),
**characterised**
**in that** at least one further recess (4) is arranged in the region of the bottom of the nozzle body (1), this recess (4) being provided with at least one through opening (7) which connects the recess (4) to the circumferential surface (8) of the nozzle body (1), and the nozzle tip (20) being able to be inserted through the recess (4) into the opening (7) and detachably fixed there.

2. Apparatus according to Claim 1,
**characterised**
**in that** a plurality of nozzle tips (20) are provided and the recess (4) is provided with a number of openings (7) corresponding to the number of nozzle tips (20).

3. Apparatus according to Claim 1 or 2,
**characterised**
**in that** the nozzle tips (20a) are arranged in the nozzle body (1a) at least in groups in a row and/or in the manner of a triangle, square or in a polygon shape.

4. Apparatus according to Claim 1 or 2,
**characterised**
**in that** the nozzle body (1) has a substantially cylindrical shape, at least in sections, the openings (7) being arranged such that the nozzle tips (20) project substantially in a star shape in the radial direction from the nozzle body (1).

5. Apparatus according to one of Claims 1 to 4,
**characterised**
**in that** the recess (4) has a substantially dish-like cylindrical or polygonal cross-sectional shape with a base (5) running perpendicular to the longitudinal axis of the nozzle body (1) and a side wall (6) running substantially perpendicular to the base.

6. Apparatus according to Claim 5,
**characterised**
**in that** the openings (7) are arranged substantially in the region of the side wall (6).

7. Apparatus according to one of Claims 1 to 6,
**characterised**
**in that** the nozzle tips (20) have a flange-, collar- or head-like shoulder (21) at their end opposite the tip (19).

8. Apparatus according to Claim 7,
**characterised**
**in that** the collar surface (26) of the head-like shoulder (21) of the nozzle tips (20) facing the side wall (6) of the recess (4) is constructed as a stop face which can be brought to bear in a supported manner on the side wall (6) of the recess (4).

9. Apparatus according to one of Claims 1 to 8,
**characterised**
**in that** the nozzle tips (20) and the through openings (7) are provided, at least in sections, with substantially cylindrical fitting surfaces (17, 9) such that the nozzle tips (20) can be inserted at least substantially free from play into the openings (7).

10. Apparatus according one of Claims 7 to 9,
**characterised**
**in that** the head-like shoulder (21) has an engagement (28, 29) for a tool with which the nozzle tips (20) can be pulled out of the opening.

11. Apparatus according to Claim 10,
**characterised**
**in that** the engagement is formed by an annular-groove-like indentation (28) encircling the head-like shoulder (21) on its radial outer surface, at least in sections.

12. Apparatus according to Claim 10,
**characterised**
**in that** the engagement is formed by an internal thread (29) constructed in the head surface.

13. Apparatus according to one of Claims 7 to 12,
**characterised**
**by** a fixing element (24, 24') which can be arranged in the recess (4) between the head-like shoulders (21) of the nozzle tips (20) and whose outer surfaces (26) facing the head surfaces of the nozzle tips (20) are constructed as stop faces on the head surfaces such that when the nozzle tips (20) are mounted and the fixing element (24, 24') is mounted, the head surfaces of the nozzle tips (20) come to bear in a supported manner on the stop faces (26).

14. Apparatus according to Claim 13,
**characterised**
**in that** the fixing element (24, 24') is constructed as a fixing block having a substantially cylindrical or polygonal cross-section which can be detachably fixed to the bottom (5) of the recess (4) by means of a fixing screw (25) .

15. Apparatus according to one of Claims 1 to 8,
**characterised**
**in that** the nozzle tips (20) are provided, at least in sections, with an external thread and the through openings (7) are provided, at least in sections, with an internal thread complementary thereto, so that the nozzle tips (20) can be screwed into the openings (7).

16. Apparatus according to Claim 15,
**characterised**
**in that** the head-like shoulder (21) is constructed in the manner of a screw head, especially in the manner of a hexagon socket screw.

17. Apparatus according to one of Claims 1 to 16,
**characterised**
**in that** the recess (4) can be closed directly or indirectly with a cover (30).

18. Apparatus according to one of Claims 1 to 17,
**characterised**
**in that**, at their end facing the outer circumferential surface (8) of the nozzle body (1), the openings (7) have an internal diameter larger than the external diameter of the nozzle tips (20) in this region, so that between the outer wall of the nozzle tips (20) and the inner wall of the openings (7) there is formed a region having an annular cross-section into which the plastic material is injected.

19. Apparatus according to Claim 18,
**characterised**
**in that** the annular region is enclosed by a ring element (11) which is arranged in the opening (7) of the nozzle body (20).

20. Apparatus according to Claim 19,
**characterised**
**in that** the ring element (11) is made of a poorly heat-conducting material, especially of titanium.

21. Apparatus according to Claim 19 or 20,
**characterised**
**in that** the ring element (11) projects at least slightly over the outer circumferential surface (8) of the nozzle body (1) and can be brought to bear in a sealing manner on the allocated surface of the mould (12) having the mould cavity.

22. Apparatus according to one of Claims 1 to 21,
**characterised**
**in that** the nozzle body (1) has a central feed channel (2) for the plastic material to be injected, which channel which branches into feed lines (31) to the nozzle tips (20).

23. Apparatus according to Claim 22,
**characterised**
**in that** the feed lines (31) open directly into the annular region around the nozzle tips (20).

24. Apparatus according to Claim 22,
**characterised**
**in that** the nozzle tips (20) each have a recess (32) which is substantially continuous in the longitudinal direction and which extends from the head surface (27) into the region of the tip (19), the feed lines (31') opening into the nozzle tips (20) in the region of the head surface (27), so that the plastic material is injected indirectly via the nozzle tips (20) into the annular region.

25. Apparatus according to Claim 24,
**characterised in that** the fixing element (24') has substantially radially running channels (31') corresponding to the number of nozzle tips (20), these channels (31') being connected at their first end to the feed channel (2) of the nozzle body (1) and opening at their second end into the respective recesses (32) of the nozzle tips (20).

26. Apparatus according to one of Claims 1 to 25,
**characterised**
**in that** the nozzle body (1) is provided with a device for thermal conditioning, especially with a heating device (3).

## Revendications

1. Dispositif pour l'injection notamment de pièces moulées en matière synthétique, dans lequel au moins une cavité de moule (14) à combler, ménagée dans un outil (12), est disposée latéralement à coté d'un corps central de filière (1), avec au moins une pointe de filière (20) disposée dans et/ou contre le corps de filière (1), laquelle dépasse vers l'extérieur de la surface périphérique (8) du corps de filière (1) et forme un canal d'injection pour la cavité de moule (14) dans un évidement (10) de l'outil (12) et/ou du corps de filière (1), **caractérisé en ce que**
au moins un autre évidement (4) est disposé au niveau du fond du corps de filière (1), ledit évidement (4) présentant au moins une ouverture (7) de passage reliant l'évidement (4) à la surface périphérique (8) du corps de filière (1), et la pointe de filière (20) pouvant être mise en place dans l'ouverture (7) à travers l'évidement (4) et y être fixée de manière amovible.

2. Dispositif selon la revendication 1, **caractérisé en ce que**
une pluralité de pointes de filière (20) est prévue et **en ce que** l'évidement (4) présente un nombre d'ouvertures (7) correspondant au nombre de pointes de filière (20).

3. Dispositif selon la revendication 1 ou 2, **caractérisé en ce que**
les pointes de filière (20a) du corps de filière (1a) sont disposées au moins regroupées en rangée et/ou à la manière d'un triangle, d'un carré ou avec une forme polygonale.

4. Dispositif selon la revendication 1 ou 2, **caractérisé en ce que**
le corps de filière (1) présente au moins partiellement une forme sensiblement cylindrique, les ouvertures (7) étant disposées de telle manière que les pointes de filière (20) dépassent du corps de filière (1) sensiblement en étoile dans la direction radiale.

5. Dispositif selon l'une des revendications 1 à 4, **caractérisé en ce que**
l'évidement (4) présente une forme de godet sensiblement cylindrique ou polygonale avec un fond (5) s'étendant perpendiculairement à l'axe longitudinal du corps de filière (1) et une paroi latérale (6) s'étendant sensiblement perpendiculairement au fond.

6. Dispositif selon la revendication 5, **caractérisé en ce que**
les ouvertures (7) sont disposées sensiblement au niveau de la paroi latérale (6).

7. Dispositif selon l'une des revendications 1 à 6, **caractérisé en ce que**
les pointes de filière (20) présentent une partie (21) en forme de flasque, d'épaulement ou de tête à leur extrémité opposée à l'extrémité pointue (19).

8. Dispositif selon la revendication 7, **caractérisé en ce que**
la surface d'épaulement (26) de la partie (21) en forme de tête des pointes de filière (20) dirigée vers la paroi latérale (6) de l'évidement (4) est prévue comme surface de butée pouvant être mise en appui de butée contre la paroi latérale (6) de l'évidement (4).

9. Dispositif selon l'une des revendications 1 à 8, **caractérisé en ce que**
les pointes de filière (20) et les ouvertures (7) de passage comportent au moins partiellement des surfaces ajustées (17, 9) sensiblement cylindriques, de telle manière que les pointes de filière (20) soient insérables au moins sensiblement sans jeu dans les ouvertures (7).

10. Dispositif selon l'une des revendications 7 à 9, **caractérisé en ce que**
la partie (21) en forme de tête présente une prise (28, 29) pour un outil au moyen duquel les pointes de filière (20) peuvent être extraites de l'ouverture.

11. Dispositif selon la revendication 10, **caractérisé en ce que**
la prise est formée par une gorge annulaire (28) entourant au moins partiellement la partie (21) en forme de tête sur sa surface radialement extérieure.

12. Dispositif selon la revendication 10, **caractérisé en ce que**
la prise est formée par un filet femelle (29) ménagé dans la surface de tête.

13. Dispositif selon l'une des revendications 7 à 12, **caractérisé par**
un élément de fixation (24, 24') pouvant être disposé dans l'évidement (4) entre les parties (21) en forme de tête des pointes de filière (20), dont les surfaces extérieures (26) dirigées vers les surfaces de tête des pointes de filière (20) en tant que surfaces de butée contre les surfaces de tête sont réalisées de telle manière que les surfaces de tête des pointes de filière (20) parviennent en appui de butée contre les surfaces de butée (26) lorsque les pointes de filière (20) et l'élément de fixation (24, 24') sont montés.

14. Dispositif selon la revendication 13, **caractérisé en ce que**
l'élément de fixation (24, 24') est réalisé comme bloc de fixation de section sensiblement cylindrique ou polygonale, pouvant être fixé de manière amovible contre le fond (5) de l'évidement (4) au moyen d'une vis de fixation (25).

15. Dispositif selon l'une des revendications 1 à 8, **caractérisé en ce que** les pointes de filière (20) présentent au moins partiellement un filet mâle et les ouvertures (7) de passage au moins partiellement un filet femelle complémentaire, si bien que les pointes de filière (20) sont vissables dans les ouvertures (7).

16. Dispositif selon la revendication 15, **caractérisé en ce que**
la partie (21) en forme de tête est réalisée à la façon d'une tête de vis, notamment d'une vis à tête creuse à six pans.

17. Dispositif selon l'une des revendications 1 à 16, **caractérisé en ce que**
l'évidement (4) est directement ou indirectement obturable par un couvercle (30).

18. Dispositif selon l'une des revendications 1 à 17, **caractérisé en ce que**
les ouvertures (7) présentent un diamètre intérieur à leur extrémité dirigée vers la surface périphérique extérieure (8) du corps de filière (1), supérieur au diamètre extérieur des pointes de filière (20) dans cette zone, si bien qu'une zone de section annulaire est formée entre la paroi extérieure des pointes de filière (20) et la paroi intérieure des ouvertures (7), où la matière synthétique est injectée.

19. Dispositif selon la revendication 18, **caractérisé en ce que**
la zone annulaire est entourée par un élément en bague (11), disposé dans l'ouverture (7) du corps de filière (20).

20. Dispositif selon la revendication 19, **caractérisé en ce que**
l'élément en bague (11) est en matériau mauvais conducteur thermique, en particulier en titane.

21. Dispositif selon la revendication 19 ou 20, **caractérisé en ce que**
l'élément en bague (11) dépasse au moins légèrement de la surface périphérique extérieure (8) du corps de filière (1) et peut être mis en appui de butée étanche contre la surface correspondante de l'outil (12) présentant la cavité de moule (14).

22. Dispositif selon l'une des revendications 1 à 21, **caractérisé en ce que**
le corps de filière (1) présente un canal d'amenée central (2) pour la matière synthétique à injecter, qui se ramifie en conduits d'amenée (31) vers les pointes de filière (20).

23. Dispositif selon la revendication 22, **caractérisé en ce que**
les conduits d'amenée (31) débouchent directement dans la zone annulaire autour des pointes de filière (20).

24. Dispositif selon la revendication 22, **caractérisé en ce que**
les pointes de filière (20) présentent chacune un évidement (32) qui les traversant sensiblement en direction longitudinale, et qui s'étendent de la surface de tête (27) jusqu'à la zone de sommet (19), les conduits d'amenée (31') débouchant au niveau de la surface de tête (27) des pointes de filière (20), si bien que la matière synthétique est directement injectée dans la zone annulaire par les pointes de filière (20).

25. Dispositif selon la revendication 24, **caractérisé en ce que**
l'élément de fixation (24') comporte un nombre de canaux (31') correspondant à celui des pointes de filière (20), lesquels s'étendent sensiblement radialement, lesdits canaux (31') étant reliés au canal d'amenée (2) du corps de filière (1) à leur première extrémité, et débouchant à leur deuxième extrémité dans les évidements (32) correspondants des pointes de filière (20).

26. Dispositif selon l'une des revendications 1 à 25, **caractérisé en ce que**
le corps de filière (1) est pourvu d'un dispositif climatiseur, en particulier d'un dispositif de chauffage (3).
